(19) **Europäisches Patentamt**

**European Patent Office**

**Office européen des brevets**

(11) **EP 1 387 288 A2**

(12) **EUROPEAN PATENT APPLICATION**

(43) Date of publication:
04.02.2004 Bulletin 2004/06

(51) Int Cl.7: **G06F 17/14**

(21) Application number: 03076587.9

(22) Date of filing: 23.05.2003

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventors: • **Davis, Ian** **Winchester, Hampshire SO22 4NN (GB)** • **Pallecaros, Nicholas George** **Selisbury, Wiltshire SP5 2SE (GB)** |
| (30) Priority: **25.05.2002 GB 0212099** | (74) Representative: **Condon, Neil et al** **Siemens Shared Services Limited,** **c/o Siemens AG,** **PO Box 22 16 34** **80506 Munich (DE)** |
| (71) Applicant: **ROKE MANOR RESEARCH LIMITED** **Romsey, Hampshire SO51 0ZN (GB)** | |

(54) **Digital signal processing system**

(57) A digital signal processing system for receiving from a Fourier Transform processor a first multiplicity of data points which together represent a Fourier Transform and processing the first multiplicity of data points to generate a second multiplicity of data points which together represent one or more other Fourier Transforms, comprises: a processing means for processing the first multiplicity of data points to generate the second multiplicity of data points by processing a plurality of pairs of data points of the first multiplicity of data points, each pair of data points comprising first and second data points that are to be processed together at the process-ing means. The system further comprises a circuit for connecting the Fourier Transform processor and the processing means to route the first multiplicity of data points from the Fourier Transform processor to the processing means, in use the circuit being controlled so that the first and second data points of any given pair of the plurality of pairs of data points are input to the processing means substantially simultaneously and with at least one of them having been routed from the Fourier Transform processor to the processing means without being stored in memory. The system provides for reduced latency and memory requirements compared to known systems.

FIG 6

**Description**

This invention relates to a digital signal processing system. In particular this invention relates to a digital signal processing system for use in performing Fast Fourier Transforms (FFTs).

BACKGROUND

Fast Fourier Transforms

Fast Fourier Transforms (FFTs) are well known algorithms employed in digital signal processing systems to generate a frequency domain representation of a sampled input data signal. This is achieved by using a FFT algorithm to determine the Discrete Fourier Transform (DFT) (defined in equation (1)) of the sampled input data signal.

$$D(k) = \sum_{n=0}^{N-1} d(n)W^{nk} \quad K = 0, 1 \ldots N\text{-}1 \quad (1)$$

$$W = \exp\left(-\frac{j2\pi}{N}\right)$$

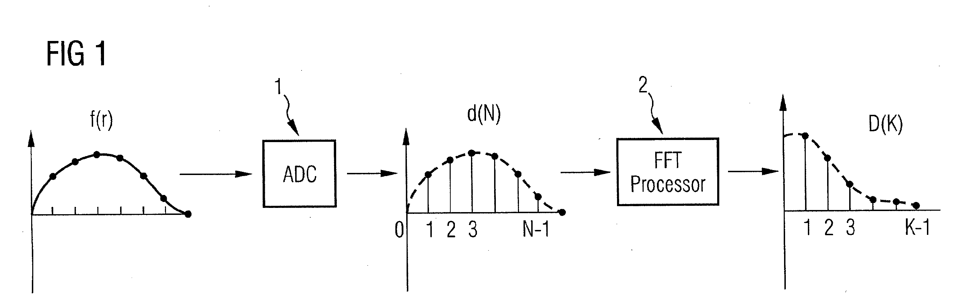

In a typical FFT digital signal processing system, an input signal f(t) shown in Figure 1, is sampled N times over one period. For each sample point N, an analog - to - digital (A/D) converter 1 converts the amplitude of the input signal f(t) into a corresponding digital value d(n), where n ranges from zero to N-1. When discussing FFT's the words 'sample' and 'point' are used interchangeably to refer to a sequence value. Also, it is common practice to refer to the FFT of a data sequence of length N as being an N - point FFT.

The resulting sequence of sampled values d(n) is fed to a FFT processing unit 2. The FFT processing unit 2 processes the sequence in accordance with equation (1) to generate an output sequence D(k) in which each sample represents the amplitude of a different frequency component of the original input signal f(t).

The number of mathematical operations performed by the FFT processing unit 2 is significantly reduced by following a "divide and conquer" strategy whereby an original N - point FFT computation is decomposed successively into smaller FFT computations. For example, a 16 - point FFT is decomposed into two 8 - point FFTs which are decomposed into four 4 - point FFT's which are decomposed into eight trivial 2 - point FFT's. A basic discussion of FFT's may be found at pages 102 to 108 of text book 'Communication systems', by Simon Haykin, published by John Wiley and Sons.

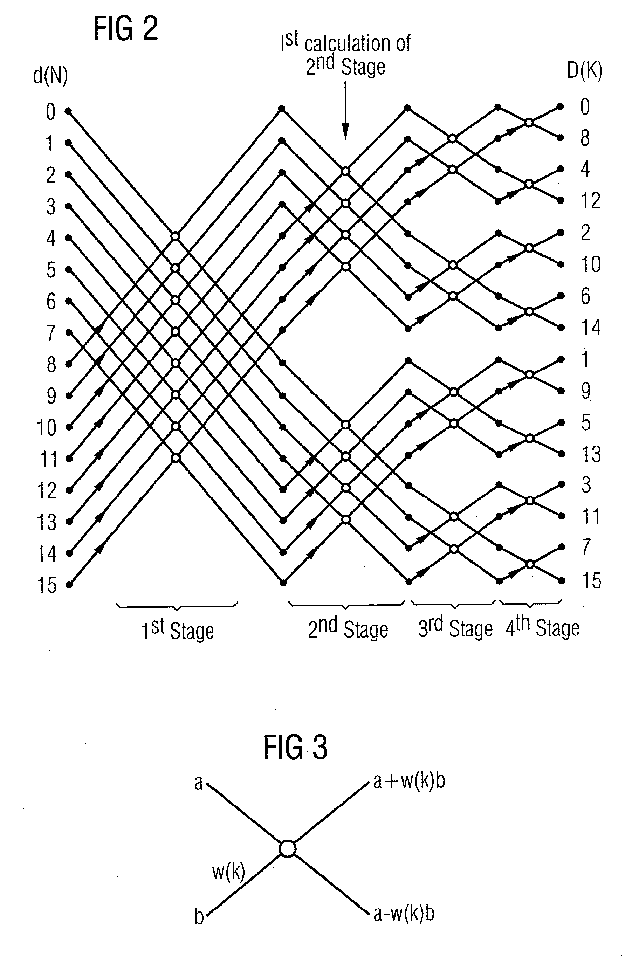

Figure 2 shows a signal flow graph of a type commonly used to illustrate the operations performed by a processing unit when implementing a FFT.

Figure 2 comprises a series of repeating structures commonly known as 'butterfly operators', an example of which is illustrated in Figure 3. A butterfly operator represents the mathematical operations performed on a pair of input values in order to generate a pair of output values. In Figure 3, the open circle or node represents an adder-subtractor, which has a pair of input branches and a pair of output branches and which outputs the sum of the two inputs at the upper output branch and the difference of the two inputs at the lower output branch. By convention, a constant (or 'twiddle factor'), indicated as $W^K$ in Figure 3 which is multiplied with an input value is written after that input value.

Thus, in Figure 3, this example of a butterfly receives value a on its upper input branch and value b on its lower input branch and ouputs the value $a + bW^K$ on its upper input branch and the value $a - bW^K$ on its lower output branch.

The 16 - point FFT illustrated in Figure 2 can thus be seen to consist of four successive calculation stages with each calculation stage performing a butterfly operation on each of 8 pairs of data inputs, producing 8 pairs of data outputs. Each calculation stage performs 8 butterfly operations and the outputs of the first, second and third stages become the inputs of the stage ahead. For reasons of clarity, the constants with which any given input values are multiplied have been omitted from Figure 2.

Pipeline Fast Fourier Transform Processor

Processors for performing calculations of the type illustrated in Figure 2 are well known to those skilled in the art. In some signal processing applications, it is desirable to build very high performance FFT processors, and to meet performance requirements, these processors are pipelined. A pipeline FFT is a well known hardware FFT architecture that uses pipeline techniques and multiple butterfly calculation units to provide speed improvement over the traditional single butterfly calculation unit approach used in a software-based FFT calculation.

In a typical pipeline FFT processor, a different butterfly calculation unit is dedicated to each different butterfly calculation stage. A pipeline FFT calculation begins with the first pair of input data points needed for the first butterfly calculation being fed to the first stage calculation unit, which performs the calculation and feeds the resultant pair of output data points to the second butterfly stage calculating unit. This process is repeated for each butterfly calculation performed in the first stage.

As soon as the second butterfly calculation stage calculating unit has received each of the pair of data points needed to perform its first butterfly calculation, this calculation is performed and the resultant pair of data points is output to the next stage. This process is repeated for each butterfly calculation performed in the second stage.

Each of calculating units present in the processor processes data in this manner, with the last calculating unit in the processor outputting the final results of the calculation.

Processing speed is enhanced because calculating units begin performing their own butterfly calculations before preceding calculating units have completed all of their butterfly calculations. For example, an inspection of Figure 2 shows that the first butterfly calculation to be performed in the second stage requires data output from the first and fifth butterfly calculations of the first stage. Thus, the second butterfly calculation stage can begin performing calculations before the sixth, seventh and eighth calculations of the first butterfly calculation stage have been completed.

Pipeline FFT architectures are discussed in detail in L.R. Rabiner and B. Gold, 'Theory and Application of Digital Signal Processing", Prentice Hall, 1975, E.H. Wold and A.M. Despain, "Pipeline and Parallel-pipeline FFT Processors for VLSI Implementation", IEEE Trans. Computers, C-33(5), pp. 414-426, 1984, G.Bi and E.V. Jones, "A pipeline FFT Processor for Word-sequential data", IEEE Trans. Acoust. Speech, Signal processing, Vol. 37(12), pp. 1982-1985, 1989, and S. He and M. Torkeslon, "A new Approach to pipeline FFT Processor", The 10th International Parallel Processing Symposium (IPPS), pp 766-770, 1996.

Real Fast Fourier Transforms and Dual-real Fast Fourier Transforms

The FFT is designed to perform complex multiplications and additions, even though the sampled input data may be purely real valued. A sub-optimal technique for performing a FPT on a purely real data sequence of length N is to treat the sequence as a 'complex' sequence of length N in which the imaginary part of each value in the sequence is set to zero and then to simply perform a full length N - point FFT on this sequence.

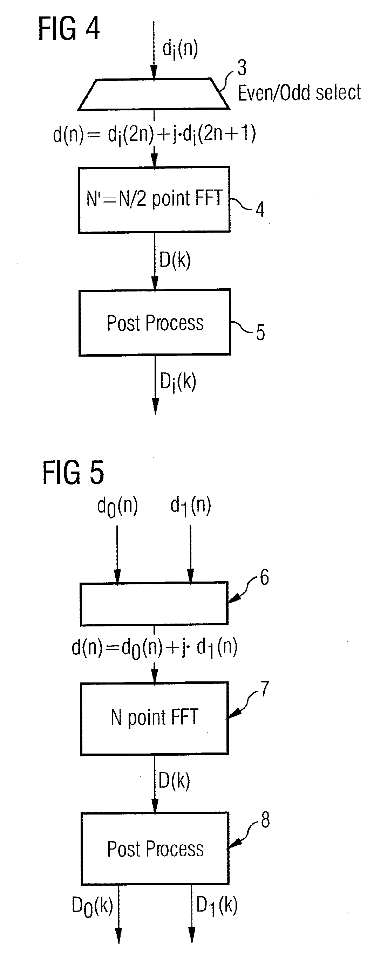

A known more efficient technique for performing a FFT on a real data sequence is illustrated in Figure 4. In this technique the real valued data sequence $d_i(n)$ of length N is converted by converter 3 into a N/2 length complex sequence d(n) defined as :-

$$d(n) = d_i(2n) + j. \; d_i(2n + 1) \quad n = 0, 1, 2.........N/2 \qquad (2)$$

i.e. a complex series of length N/2 in which each value d(n) comprises the value $d_i(2n)$ as its real part and the value $d_i(2n + 1)$ as its imaginary part.

An N/2 - point FFT is performed on the complex sequence d(n) by the FFT processor 4 to output the FFT sequence D(k).

It is shown in J.G. Proakis and D.G. Manolaki, "Digital Signal Processing: Principles, Algorithms and Applications", Prentice Hall, 1996 that the FFT $D_i(k)$ of the real sequence $d_i(n)$ is related to the FFT D(k) of the complex sequence d(n) by the following expressions:-

$$D_i(k) = A(k) + B(k)\cdot e^{\frac{-j2\pi k}{2N'}} \quad 0 \le k \le N'\text{-}1 \qquad (3)$$

$$A(k) = \frac{1}{2}\,[D(k) + D^*(N'\text{-}\,k)] \quad 0 \le k \le N'\text{-}1 \qquad (4)$$

$$B(k) = \frac{1}{2\cdot j}[D(k)D^*(N'\text{-}k)] \quad 0 \le k \le N'\text{-}1 \qquad (5)$$

where N' = N/2.

To generate the required transform sequence $D_i(k)$, the sequence $D(k)$ is fed to post processing unit 5 where a plurality of pairs of samples, each pair comprising samples $D(k)$ and $D(N-k)$ are processed in accordance with equations (3) to (5) to output the sequence $D_i(k)$.

It will be appreciated by those knowledgeable in the art of FFT computation that only N' points of the sequence $D_i(k)$ need be generated automatically, the remaining N' points if required can be calculated using the symmetry relationship of an FFT of a real valued sequence.

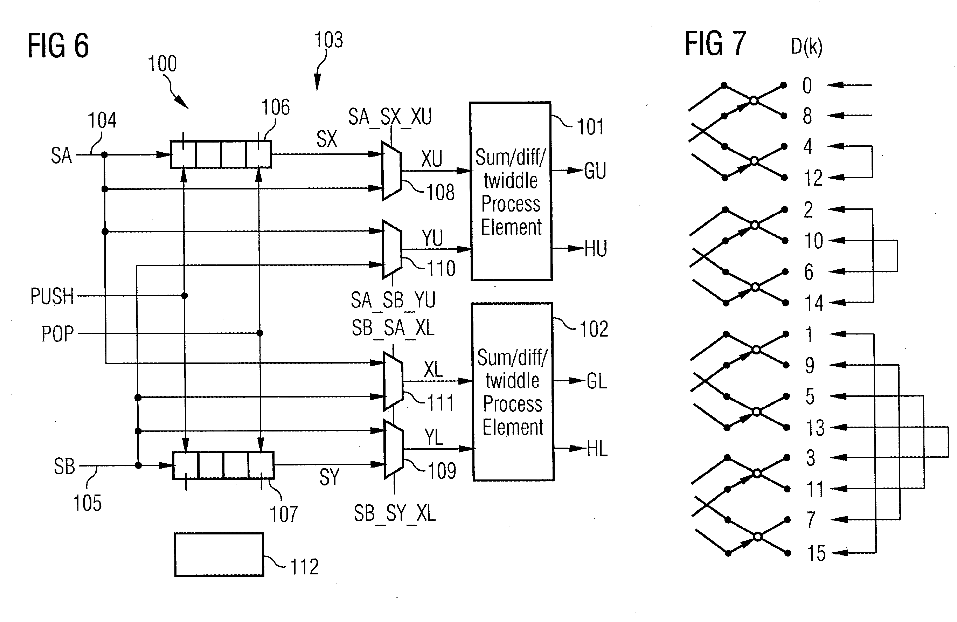

A well known efficient method of computing the FFT of each of two real data sequences is illustrated in Figure 5. This method is commonly referred to as a dual real FFT. In the dual real method, two real data sequences $d_0(n)$ and $d_1(n)$ each of length N are combined by a combiner 6 to form $d(n)$ a complex data sequence defined by:-

$$d(n)=d_0(n)+j.d_1(n) \quad n = 0, 1, 2.........N \tag{6}$$

i.e a complex data sequence of length N in which each value $d(n)$ has $d_0(n)$ as its real part and $d_1(n)$ as its imaginary part.

An N - point FFT is performed on the complex sequence $d(n)$ by the FFT processor 7 to output the FFT sequence $D(k)$.

It is also shown in J.G. Proakis and D.G. Manolaki, "Digital Signal Processing: Principles, Algorithms and Applications", Prentice Hall, 1996 that the FFT $D_0(k)$ of the real sequence $d_0(n)$ is related to the FFT $D(k)$ of the complex sequence $d(n)$ by the expression:-

$$D_0 (k) = \frac{1}{2}[D (k)+D^*(N-k)] \quad 0 \leq k \leq N-1 \tag{7}$$

and that the FFT $D_1(k)$ of the real sequence $d_1(n)$ is related to the FFT $D(k)$ of the complex sequence $d(n)$ by the expression:-

$$D_1 (k) = \frac{1}{2 \cdot j}[D(k)- D^*(N - k)] \quad 0 \leq k \leq N - 1 \tag{8}$$

To generate the required transform sequences $D_0(k)$ and $D_1(k)$, the sequence $D(k)$ is fed to post processing unit 8 for processing in accordance with equations (7) and (8).

Preferably, in order to maximise processing speeds, the processors 4 and 7 are pipeline FFT processors.

In known systems for calculating real or dual-real FFT's, the entire data sequence $D(k)$ generated by the pipeline processor 4 or 7 is stored in a buffer (not shown in Figures 4 and 5) before being output from the buffer to the post processor 5 or 8. This is necessary so that the samples of the sequence $D(k)$ can be output to the post processor 5 or 8 in an order that allows the post processing to be performed.

Storing the data samples $D(k)$ in a buffer prior to the post processing occurring, increases the time taken to calculate a real or dual-real FFT. Furthermore, the provision of a buffer between the FFT processor 4 or 7 and the post processor 5 or 8 increases the memory requirements of the system.

The present invention aims to alleviate these problems.

According to the present invention, there is provided a digital signal processing system for receiving from a Fourier Transform processor a first multiplicity of data points which together represent a Fourier Transform and processing the first multiplicity of data points to generate a second multiplicity of data points which together represent one or more other Fourier Transforms, the system comprising: processing means for processing the first multiplicity of data points to generate the second multiplicity of data points by processing a plurality of pairs of data points of the first multiplicity of data points, each pair of data points comprising first and second data points that are to be processed together at the processing means; and a circuit for connecting the Fourier Transform processor and the processing means to route the first multiplicity of data points from the Fourier Transform processor to the processing means, in use the circuit being controlled so that the first and second data points of any given pair of the plurality of pairs of data points are input to the processing means substantially simultaneously and with at least one of them having been routed from the Fourier Transform processor to the processing means without being stored in memory.

According to the invention there is also provided a signal processing apparatus comprising: processing means for receiving from a data generator a first multiplicity of data points which together represent a Fourier Transform; and processing the first multiplicity of data points to generate a second multiplicity of data points which together represent one or more further Fourier Transforms; a circuit for routing the first multiplicity of data points from the data generator to the processing means, the circuit comprising a memory means for storing data points of the first multiplicity of data points, and a controller for controlling the routing of the first multiplicity of data points across the circuit, in use, the controller controlling the routing such that an earlier data point, input to the circuit prior to a later data point with which the earlier data point needs to be processed at the processing means, is stored in the memory means until the later data point is input to the circuit, at which time both the earlier data point and the later data point are fed to the processing means, with the later data point by-passing the memory means.

According to the invention there is also provided a signal processing method comprising: generating at a data processor a first multiplicity of data points which together represent a Fourier Transform; routing the first multiplicity of data points across a circuit to a processing means; and processing the first multiplicity of data points at the processing means to generate a second multiplicity of data points which together represent one or more further Fourier Transforms, in which method the routing of data points across the circuit is controlled such that an earlier data point that is input to the circuit prior to a later data point with which the earlier input data points need to be processed at the processing means, is stored in a memory in the circuit until the later data point is input to the circuit, at which time both the earlier data point and the later data point are fed to the processing means with the later input data point by-passing the memory.

The above and further features of the invention are set forth with particularity in the appended claims and together with advantages thereof will become clearer from consideration of the following detailed description of exemplary embodiments of the invention will be given with reference to the accompanying drawings.

In the drawings:

Figure 1 schematically illustrates the calculation of a FFT of a signal f(t) and has been discussed above;
Figure 2 illustrates a flow diagram of an FFT algorithm and has been discussed above;
Figure 3 illustrates a "butterfly operation" and has been discussed above;
Figure 4 schematically illustrates the steps involved in calculating a 'real' FFT and has been discussed above;
Figure 5 schematically illustrates the steps involved in calculating a 'dual-real' FFT and has been discussed above;
Figure 6 illustrates a Digital Signal Processing system embodying the present invention;
Figure 7 illustrates the last calculation stage of the flow diagram of Figure 2;
Figure 8 illustrates another Digital Signal Processing system embodying the present invention;
Figure 9 illustrates a flow diagram of an FFT algorithm.

Referring now to Figure 6 of the accompanying drawings there is shown a digital signal processing system 100 capable of performing the post processing calculations defined by equations (3) to (5) of a real FFT, or alternatively, the post processing calculations defined by equations (7) and (8) above of a dual-real FFT.

The system 100 is arranged to perform this post processing on data representing a radix 2 FFT output from a FFT processor (not shown) preceding the system 100. The system 100 makes use of pipeline techniques to improve processing speeds. The term pipeline techniques refers to the fact that when the system 100 performs the post processing calculations defined by equations (3) to (5) or (7) and (8), each individual calculation is performed as soon as both of a pair of data points required for that calculation have been output from the preceding FFT processor (not shown).

The system 100 comprises first 101 and second 102 processing elements which perform the calculations defined by equations (3) to (5) or equations (7) and (8) on pairs of data samples input thereto. The system 100 further comprises a circuit 103 for receiving and routing to the first 101 and second 102 processing elements, data output from the preceding FFT processor (not shown in Figure 6) on which the post processing calculations are to be based.

If the system 100 is for performing the post processing calculations needed to generate a real FFT, then the preceding FFT processor, (not shown) will input to the system 100 a multiplicity of data samples which together represent the FFT of the complex valued sequence defined by equation (2) above. If the system 100 is for performing the post processing calculations needed to generate a dual - real FFT, then the preceding FFT processor (not shown) will input to the system 100 a multiplicity of data samples which together representing the FFT of the complex valued sequence defined by equation (6) above.

The circuit 103 comprises first 104 and second 105 inputs, the first input 104 connected to an input of a first memory stack 106 and the second input connected to an input of a second memory stack 107. As will be known to those skilled in the art, a memory stack is also known as a Last In First out (LIFO) memory because data is always read out from the stack in the reverse order to which it is written in.

The first memory stack 106 has its output connected to an upper input of a first multiplexer 108 and the second memory stack 107 has its output connected to a lower input of a second multiplexer 109. The first input 104 is also directly connected to a lower input of the first multiplexer 108, to the upper input of a third multiplexer 110 and also to the upper input of a fourth multiplexer 111. The second input 105 is also directly connected to a lower input of the fourth multiplexer 111, a lower input of the third multiplexer 110 and also to an upper input of the second multiplexer 109.

The respective outputs of the first 108 and third 110 multiplexers form first (XU) and second (YU) inputs to the first processing element 101. The respective outputs of the fourth 111 and second 109 multiplexers form first (XL) and second (YL) inputs to the second processing element 102. The first processing element 101 has a first output (GU) and a second output (HU). The second processing element 102 has a first output (GL) and a second output (HL).

A control processor 112 controls the reading and writing of data to the first 106 and second 107 memory stacks via respective control lines labelled 'push' and 'pop'. The control processor 112 also controls the outputs of the first 108, second 109, third 110 and fourth 111 multiplexers via respective control lines labelled 'SA_SX_XU', 'SB_SY_YL', 'SA_SB_YU', 'SB_SA_XL'.

The operation of the system 100 will now be explained with reference to the processing of a data sequence output from a radix 2, 16 point FFT. The flow diagram of a radix 2, 16-point FFT has already been discussed with respect to Figure 2, and for convenience the sequence of data points D(k) output from the last butterfly stage is reproduced in Figure 7.

It can be easily understood from equations (3) to (5) above and from equations (7) and (8) above, that whether the system 100 is for processing the input sequence D(k) to generate a real FFT $D_i(k)$ (see Figure 4) or alternatively to generate a dual-real FFT comprising the FFT's $D_0(k)$ and $D_1(k)$ (see Figure 5) that each data point of the output sequence is generated by processing a pair of data points D(k) and D(16-k) of the input sequence (16 because in this example the input sequence relates to a 16 point FFT).

In Figure 7 all input sample data points that must be processed as a pair in the calculations performed by the system 100 are shown linked by a double headed arrow. Thus, it is shown that sample D(4) is paired with sample D(12), sample D(2) is paired with sample D(14) and so on down the column. It is to be noted that there are two special cases of samples, namely, D(0) and D(8) neither of which is paired with another sample but instead, each of which is paired with itself. The reasons for this can be understood by noting that in this 16 - point FFT example, D(k) and D(N-k) are equivalent for k = 8 and that through the imaging properties of the FFT D(0) and D(16) are equivalent to each other.

From Figure 7 it can be seen that the data samples D(k) generated in the last stage of the FFT are generated in groups of two data samples at a time, starting with D(0) and D(8) followed by D(4) and D(12) and so on until D(7) and D(15). Each group can be thought of as comprising an upper and a lower branch. So, for example, in the first group of two data samples, D(0) is on the upper branch and D(8) is on the lower branch, whilst in the second group D(4) is on the upper branch and D(12) is on the lower branch.

The data sequence D(k) is input to the system 100 two samples per clock cycle starting with the first group of samples D(0) and D(8) in the first cycle, followed by the second group of samples D(4) and D(12) in the second cycle, and continuing down the list illustrated in Figure 7 until the last group of samples D(7) and D(15) are input in the last clock cycle.

The system 100 is arranged so that all the samples from the upper branch of the FFT D(k) i.e. D(0), D(4), D(2), D(6), D(1), D(5); D(3) and D(7) are input to the first input 104 and that all the samples from the lower branch i.e. D(8), D(12), D(10), D(14), D(9), D(13), D(11) and D(15) are input to the second input 105.

In operation, all of the samples input to the system 100 at the first input 104, with the exception of sample D(0), are paired with samples input to the system at the second input 105 for processing at the first 101 or second 102 processing elements. Likewise, all of the samples input to the system 100 at the second input 105, with the exception of sample D(8), are paired with samples input to the system at the first input 104 for processing at the first 101 or second 102 processing elements.

Any sample input to the first input 104 prior to the sample with which it is paired being input at the second input 105, is stored in the first stack 106 in readiness for the arrival of its paired sample. When the paired sample of a sample stored in the first stack 106 arrives at the second input 105, the control processor 112 causes the stored sample to be read from the first stack 106 to the first processing element 101 via the upper input of the first multiplexer 108. At the same time, the control processor 112 causes the sample arriving at the second input 105 to be routed to the first processing element 101 via the lower input of the third multiplexer 110. Thus both samples are routed together to the first processing unit 101 for processing in accordance with equations (3) to (5) or (7) to (8) as the case may be.

Similarly, any sample input at the second input 105 prior to the sample with which it is paired being input at the first input 104 is stored in the second stack 107 in readiness for the arrival of its paired sample. When the paired sample of a sample stored in the second stack 107 arrives at the first input 104, the control processor 112 causes the stored sample to be read from the second stack 107 to the second processing element 102 via the lower input of the second multiplexer 109. At the same time, the control processor 112 causes the sample arriving at the first input 104 to be routed to the second processing element 102 via the upper input of the fourth multiplexer 111. Thus both samples are routed together to the second processing element 102 for processing in accordance with equations (3) to (5) or (7) to (8) as the case may be.

The first two samples D(0) and D(8) to be input to the system 100, which are input at the first input 104 and at the second input 105 respectively are special cases because both samples must be self-paired for processing at the processing elements 101 and 102. The control processor 112 causes sample D(0) to be routed simultaneously twice to the first processing element 101, once via the lower input of the first multiplexer 108 and also via the upper input of the third multiplexer 110. At the same time as this, the control processor 112 causes sample D(8) to be routed simultaneously twice to the second processing element 102, once via the upper input of the second multiplexer 109 and also via the lower input of the fourth multiplexer 111.

The second two samples, D(4) and D(12), to be input to the system 100 are input at the first 104 and second 105 inputs respectively and are also special cases because they are paired together for processing at one of the processing elements 101 and 102. When these two samples are input to the system 100 they are not stored, but instead the control processor 112 causes sample D(4) to be routed to the first processing element 101 via the lower input of the first multiplexer 108 and at the same time, sample D(12) to be routed to the first processing element 101, via the lower input of the third multiplexer 110.

Alternatively, when these two samples are input to the system 100, the control processor 112 could cause sample D(4) to be routed to the second processing element 102 via the upper input of the fourth multiplexer 111 and at the same time, sample D(12) to be routed to the second processing element 102 via the upper input of the second multiplexer 109. It is simply a matter of design choice as to which of these options is preferred.

As can be seen from Figure 7, the third two samples to be input to the system 100 are D(2) and D(10). It can also be seen from Figure 7 that D(2) is to be combined with D(14) and that D(10) is to be combined with D(6), these being the fourth two samples to be input to the system 100. It is therefore necessary for samples D(2) and D(10) to be stored in readiness for the arrival of the samples with which they are paired. To achieve this, the control processor 112 controls the circuit 103 so that neither D(2) or D(10) are directly input to either of the process elements 102 and 103 but instead D(2) is stored in a location in the first stack 106 and D(10) is stored in a location in the second stack 107.

When the fourth two samples D(6) and D(14) are input to the system 100, the control processor controls the circuit 103 so that D(2) is read from the first stack 106 to the first processing element 101 via the upper input of the first multiplexer 108 and at the same time D(14) is input to the first processing element 101 via the lower input of the third multiplexer 110. Simultaneously, the control processor 112 controls the circuit 103 so that D(10) is read from the second stack 107 to the second processing element 102 via the lower input of the second multiplexer 109 whilst at the same time D(6) is input to the second processing element 102 via the upper input of the fourth multiplexer 111.

The fifth two samples to be input to the system 100 are D(1) and D(9). It can be seen from Figure 7 that D(1) is to be combined with D(15) and that D(9) is to be combined with D(7), these being the final two samples to be input to the system 100. It is therefore necessary for samples D(1) and D(9) to be stored in readiness for the arrival of the samples with which they are paired and so the control processor 112 causes D(1) to be stored in a first location in the first stack 106 and D(9) to be stored in a first location in the second stack 107.

The sixth two samples to be input to the system 100 are D(5) and D(13). D(5) is to be combined with D(11) and D(13) is to be combined with D(3), these being the seventh two samples to be input to the system 100. D(5) and D(13) are stored in readiness for the arrival of the samples with which they are paired and so the control processor 112 causes D(5) to be stored in a second location in the first stack 106 and D(13) to be stored in a second location in the second stack 107.

When the seventh two samples D(3) and D(11) are input to the system 100, the control processor 112 causes D(5) to be read from its location in the first stack 106 to the first processing element 101 via upper first input of the first multiplexer 108 and at the same time D(11) to be input to the first processing element 101 via the lower input of the third multiplexer 110. Simultaneously, the control processor 112 causes D(13) to be read from its location in the second stack 107 to the second processing element 102 via the lower input of the second multiplexer 109, whilst at the same time D(3) is input to the second processing element 102 via the upper input of the fourth multiplexer 111.

When the final two samples D(7) and D(15) are input to the system 100, the control processor 112 causes D(1) to be read from its location in the first stack 106 to the first processing element 101 via upper input of the first multiplexer 108 and at the same time D(15) to be input to the first processing element 101 via the lower input of the third multiplexer 110. Simultaneously, the control processor 112 causes D(9) to be read from its location in the second stack 107 to the second processing element 102 via the lower input of the second multiplexer 109, whilst at the same time D(7) is input to the second processing element 102 via the upper input of the fourth multiplexer 111.

Each processing unit 101 or 102 may process a pair of input samples in accordance with equations (3) to (5) or (7) and (8) to output two output values at a time. It follows that the processing units 101 and 102 in combination can output in parallel a maximum of four values in a clock cycle. For example, if the above example relates to a real FFT calculation, then the first processing element 101 will process input samples D(5) and D(11) to generate the output samples $D_i(11)$ and $D_i(5)$ of the real FFT $D_i(K)$, whilst at the same time, the second processing element 102 will process input samples D(7) and D(9) to generate the output samples $D_i(7)$ and $D_i(9)$ of the real FFT $D_i(K)$. Such processing represents a marked improvement in processing times compared to prior art techniques.

The operation of the system 100 when processing a 16 point radix 2 FFT is summarised in table 1 with the value at the first input being labelled (SA) and the value at the second input being labelled (SB).

Table 1

| CLOCK CYCLE | 0 | 1 | 2 | 3 | 4 | 5 | 6 | 7 |
|---|---|---|---|---|---|---|---|---|
| SA INDEX | 0 | 4 | 2 | 6 | 1 | 5 | 3 | 7 |
| SB INDEX | 8 | 12 | 10 | 14 | 9 | 13 | 11 | 15 |
| PUSH | FALSE | FALSE | TRUE | FALSE | TRUE | TRUE | FALSE | FALSE |
| POP | FALSE | FALSE | FALSE | TRUE | FALSE | FALSE | TRUE | TRUE |
| STACK 106 CONTENTS | - | - | 2 - | - | 1 1 | 5 1 | 1 1 | - |
| | - | - | - | - | - | 1 | - | - |
| STACK 107 CONTENTS S | - | - | 10 | - | 9 | 13 9 | | - |
| | - | - | - | - | - | 9 | - | - |
| SX INDEX | - | - | - | 2 | - | - | 5 | 1 |
| SY INDEX | - | - | - | 10 | - | - | 13 | 9 |
| SA_SX_XU MUX OUTPUT | SA | SA | - | SX | - | - | SX | SX |
| SA_SB_YU MUX OUTPUT | SA | SB | - | SB | - | - | SB | SB |
| SB_SA_XL MUX OUTPUT | SB | - | - | SA | - | - | SA | SA |
| SB_SY_YL MUX OUTPUT | SB | - | - | SY | - | - | SY | SY |
| XU INDEX | 0 | 4 | - | 2 | - | - | 5 | 1 |
| YU INDEX | 0 | 12 | - | 14 | - | - | 11 | 15 |
| XL INDEX | 8 | - | - | 6 | - | - | 3 | 7 |
| YL INDEX | 8 | - | - | 10 | - | - | 13 | 9 |
| GU INDEX | 0 | 4 | - | 2 | - | - | 5 | 1 |
| HU INDEX | - | 12 | - | 14 | - | - | 11 | 15 |
| GL INDEX | 8 | - | - | 6 | - | - | 3 | 7 |
| HL INDEX | - | - | - | 10 | - | - | 13 | 9 |

In this 16 point FFT example the maximum number of samples stored in either of the first 106 and second stacks 107 at any one time is two. Thus, each of the first 106 and second 107 stacks need only comprise two memory locations. In the more general case, of an N - point FFT, each stack 106 and 107 must have N/8 locations to be able to accommodate the maximum number of samples needed to be stored at any one time and thus the system 100 as a whole a total of N/4 memory locations. As previously mentioned, in the prior art systems illustrated in Figures 4 and 5, a buffer (not shown) is located between the FFT processor and the post processing unit. The buffer stores all the data points output from the processor before they are input into the post processing unit. To accommodate an N-point FFT the buffer requires N memory locations, a factor of four greater than the number of memory locations required by the system 100.

Thus systems embodying the present invention have the twin advantages of reduced latency and memory requirement as compared to the block based prior art systems that require a full length buffer between the FFT processor and the post processor.

In the above example, the data sequence D(k) is input to the system 100 is a so called 'bit reversed' sequence. It will be appreciated that the data sequence D(k) may also be input to the system 100 in non-bit reversed sequence, although this sequence would require larger stacks to store the maximum number of samples needed to be stored at any one time during the processing.

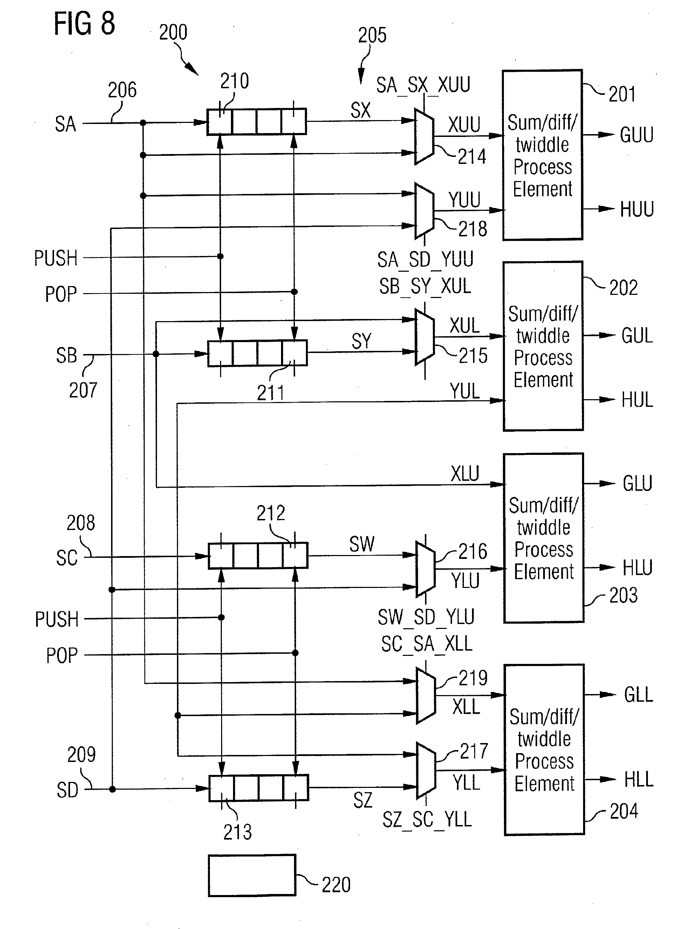

Referring now to Figure 8 of the accompanying drawings there is shown another digital signal processing system 200 capable of performing the post processing calculations defined by equations (3) to (5) of a real FFT, or alternatively, the post processing calculations defined by equations (7) and (8) above of a dual-real FFT.

The system 200 is arranged to perform this post processing on data representing a radix 4 FFT output from a FFT processor (not shown) preceding the system 200.

The system 200 comprises first 201, second 202, third 203 and fourth 204 processing elements which perform the calculations defined by equations (3) to (5) and equations (7) and (8) on a plurality of pairs of data samples input thereto.

The system 200 further comprises a circuit 205 for receiving and routing to the first 201, second 202, third 203 and fourth 204 processing elements, the radix 4 FFT data samples output from the preceding FFT processor (not shown in Figure 7) on which the post processing calculations are to be based.

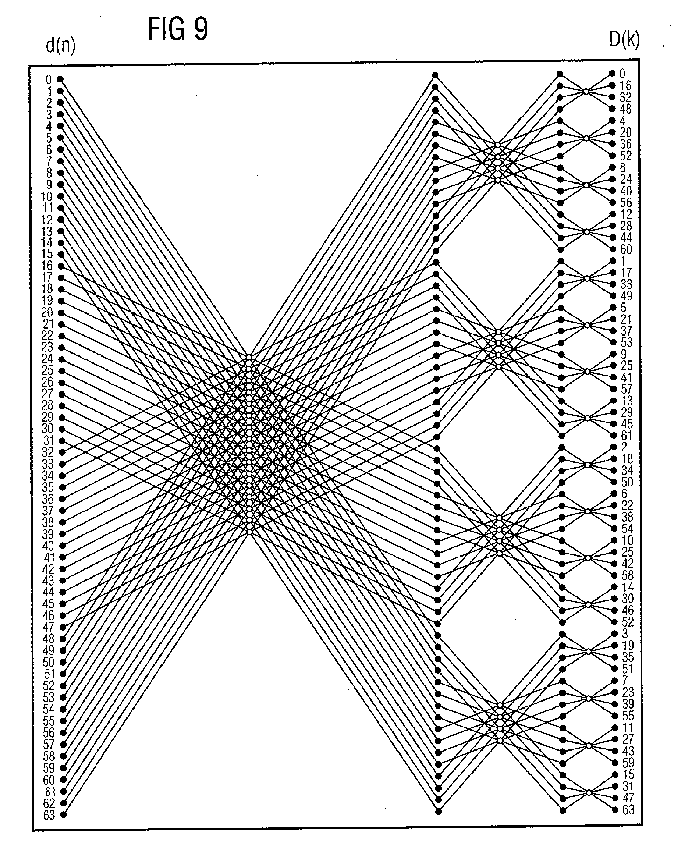

The flow diagram of a radix 4, 64 point FFT is shown in Figure 9.

From Figure 9 it can be seen that the data samples D(k) generated in the last stage of the FFT are generated in groups of four data samples at a time, each group comprising an upper, a middle upper, a middle lower and a lower branch. So, for example, in the first group of four samples D(0), D(16), D(32) and D(48), it can be seen that D(0) is on the upper branch, D(16) on the middle upper branch, D(32) is on the middle lower branch and D(48) on the lower branch.

The circuit 205 comprises first 206, second 207, third 208 and fourth 209 inputs. In use, data samples are input to the system 200 in groups of four each clock cycle. In terms of the Radix 4 FFT shown in Figure 8, the first group of data points to be input to the system 200 would be D(0), D(16), D(32) and D(48), the second D(4), D(20), D (36) and D(52) and so on until the last group D(15), D(31), D(47) and D(63).

The first input 206 is arranged to receive the samples output on the upper branches of the groups, the second input 207 is arranged to receive the samples output on the upper middle branches of the groups, the third input 208 is arranged to receive the samples output on the lower middle branches of the groups and the fourth input 209 is arranged to receive the samples output on the lower branches of the groups. That is to say, samples D(0), D(4), D(8) etc are input on the first input 206, samples D(16), D(20), D(24) etc are input on the second input 207, samples D(32), D(36), D(40) etc are input on the third input 208, and samples D(48), D(52), D(56) etc are input on the fourth input 209.

The first input 206 is connected to an input of a first memory stack 210, the second input 207 is connected to an input of a second memory stack 211, the third input 208 is connected to an input of a third memory stack 212 and the fourth input 209 is connected to an input of a fourth memory stack 213.

The first memory stack 210 has its output (SX) connected to an upper input of a first multiplexer 214, the second memory stack 211 has its output (SY) connected to a lower input of a second multiplexer 215, the third memory stack 212 has its output (SW) connected to an upper input of a third multiplexer 216 and the fourth memory stack 213 has its output (SZ) connected to a lower input of a fourth multiplexer 217.

The first input 206 is also directly connected to a lower input of the first multiplexer 214, to an upper input of a fifth multiplexer 218 and also to an upper input of a sixth multiplexer 219.

The second input 207 is also directly connected to an upper input of the second multiplexer 215 and to an upper input (XLU) of the third processing element 203.

The third input 208 is directly connected to a lower input (YUL) of the second processing element 202, to a lower input of the sixth multiplexer 219 and to an upper input of the fourth multiplexer 217.

The fourth input 209 is directly connected to a lower input of the fifth multiplexer 218 and to a lower input of the third multiplexer 216.

The respective outputs of the first 214 and fifth 218 multiplexers form upper (XUU) and lower (YUU) inputs to the first processing element 201, whilst the output of the second multiplexer 215 forms an upper input (XUL) to the second processing element 202. The output of the third multiplexer 216 forms a lower input (YLU) to the third processing element 203. The respective outputs of the sixth 219 and fourth 217 multiplexers form upper (XLL) and lower (YLL) inputs to the fourth processing element 204.

A control processor 220 controls the writing and reading of data to the first 210, second 211, third 212 and fourth 213 memory stacks via respective control lines labelled 'push' and 'pop'. The control processor 220 also controls the outputs of the first 214, second 215, third 216, fourth 217, fifth 218 and sixth 219 multiplexers via respective control lines labelled 'SA_SX_XUU', 'SB_SY_XUL', 'SW_SD_YLU', 'SZ_SC_YLL', 'SA_SD_YUU', 'SC_SA_XLL'.

In operation, all of the samples input to the system 200 at the first input 206, with the exception of sample D(0), are paired with samples input to the system at the fourth input 209 for processing at the first 201 or fourth 204 processing elements. Likewise, all of the samples input to the system 200 at the fourth input 209, with the exception of sample D(48), are paired with samples input to the system at the first input 206 for processing at the first 201 or fourth 204 processing elements.

Any sample input to the first input 206 prior to the sample with which it is paired being input at the fourth input 209 is stored in the first stack 210 in readiness for the arrival of its paired sample. When the paired sample of a sample stored in the first stack 210 arrives at the fourth input 209, the control processor 220 causes the stored sample to be read from the first stack 210 to the first processing element 201 via the upper input of the first multiplexer 214. At the same time, the control processor causes the sample arriving at the fourth input 209 to be routed to the first processing element 201 via the lower input of the fifth multiplexer 218. Thus both samples are routed together to the first processing unit 201 for processing in accordance with equations (3) to (5) or (7) to (8) as the case may be.

Similarly, any sample input at the fourth input 209 prior to the sample with which it is paired being input at the first input 206 is stored in the fourth stack 213 in readiness for the arrival of its paired sample. When the paired sample of a sample stored in the fourth stack 213 arrives at the first input 206, the control processor 220 causes the stored sample to be read from the fourth stack 213 to the fourth processing element 204 via the lower input of the fourth multiplexer 217. At the same time, the control processor 220 causes the sample arriving at the first input 206 to be routed to the fourth processing element 204 via the upper input of the sixth multiplexer 219. Thus both samples are routed together to the fourth processing element 204 for processing in accordance with equations (3) to (5) or (7) to (8) as the case may be.

All of the samples input to the system 200 at the second input 207, with the exception of sample D(16), are paired with samples input to the system at the third input 208 for processing at the second 202 or third 203 processing elements. Likewise, all of the samples input to the system 200 at the third input 208, with the exception of sample D (32), are paired with samples input to the system at the second input 207 for processing at the second 202 or third 203 processing elements.

Any sample input to the second input 207 prior to the sample with which it is paired being input at the third input 208 is stored in the second stack 211 in readiness for the arrival of its paired sample. When the paired sample of a sample stored in the second stack 211 arrives at the third input 208, the control processor 220 causes the stored sample to be read from the second stack 211 to the second processing element 202 via the lower input of the second multiplexer 215. At the same time, the control processor causes the sample arriving at the third input 208 to be routed to the second processing element 202 via the lower input (YUL) of the element 202. Thus both samples are routed together to the second processing unit 202 for processing in accordance with equations (3) to (5) or (7) to (8) as the case may be.

Similarly, any sample input at the third input 208 prior to the sample with which it is paired being input at the second input 207 is stored in the third stack 212 in readiness for the arrival of its paired sample. When the paired sample of a sample stored in the third stack 212 arrives at the second input 207, the control processor 220 causes the stored sample to be read from the third stack 212 to the third processing element 203 via the upper input of the third multiplexer 216. At the same time, the control processor 220 causes the sample arriving at the second input 207 to be routed to the third processing element 203 via the upper input (XLU) of the element 203. Thus both samples are routed together to the third processing element 203 for processing in accordance with equation (3) to (5),or (7) to (8),as the case may be.

Sample D(0) which is input at the first input 206 is a special case because this is a sample which must be paired with itself for processing. When this sample is input to the system 200, the control processor 220 causes the sample to be routed to the first processing element 201, via the lower input of the first multiplexer 214 and at the same time also via the upper input of the fifth multiplexer 218.

Likewise, sample D(32) which is input at the third input 208 is a special case because this is a sample which must also be paired with itself for processing. When this sample is input to the system 200, the control processor 220 causes the sample to be routed to the fourth processing element 204, via the upper input of the fourth multiplexer 217 and at the same time also via the lower input of the sixth multiplexer 219.

Sample D(16) which is input at the second input 207 and sample D(48) which is input at the fourth input 209 are also special cases because they are input to the system 200 at the same time and are paired together for processing at a processing element. When these two samples are input to the system 200, the control processor 220 causes sample D(16) to be routed to the third processing element 203 via its upper input (XLU) and at the same time, sample D(48) to be routed to the third processing element 203, via the lower input of the third multiplexer 216.

Alternatively, when these two samples are input to the system 200, the control processor 220 could cause sample D(16) to be routed to the second processing element 202 via the upper input of the second multiplexer 215 and at the same time, sample D(48) to be routed to the second processing element 202 via, its lower input (YUL). It is simply a matter of design choice as to which of these options is preferred.

The operation of the system 200 when processing a 64-point radix 4 FPT is summarised in table 2 with the value at the first input being labelled (SA), the value at the second input being labelled (SB), the value at the third input being labelled (SC) and the value at the fourth input being labelled (SD). In this example the maximum number of samples that need to be stored in each of the stacks at any one time is six. In the general case of a N-point FFT each stack would required (N/8)-2 memory locations to accommodate the maximum number of samples needed to be stored at any one time.

Table 2

| CLOCK CYCLE | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| SA INDEX | 0 | 4 | 8 | 12 | 1 | 5 | 9 | 13 | 2 | 6 | 10 | 14 | 3 | 7 | 11 | 15 |
| 5B INDEX | 16 | 20 | 24 | 28 | 17 | 21 | 25 | 29 | 18 | 22 | 26 | 30 | 19 | 23 | 27 | 31 |
| SC INDEX | 32 | 36 | 40 | 44 | 33 | 37 | 41 | 45 | 34 | 38 | 42 | 46 | 35 | 39 | 43 | 47 |
| SD INDEX | 48 | 52 | 56 | 60 | 49 | 53 | 57 | 61 | 50 | 54 | 58 | 62 | 51 | 55 | 59 | 63 |
| PUSH | FALSE | TRUE | FALSE | FALSE | TRUE | TRUE | TRUE | TRUE | TRUE | TRUE | FALSE | FALSE | FALSE | FALSE | FALSE | FALSE |
| POP | FALSE | FALSE | FALSE | TRUE | FALSE | FALSE | FALSE | FALSE | FALSE | FALSE | TRUE | TRUE | TRUE | TRUE | TRUE | TRUE |
| STACK 210 CONTENTS | - | 4 | 4 | - | 1 | 5 | 9 | 13 | 2 | 6 | 2 | 13 | 9 | 5 | 1 | - |
|  | - | - | - | - | - | 1 | 5 | 9 | 13 | 2 | 13 | 9 | 5 | 1 | - | - |
|  | - | - | - | - | - | - | 1 | 5 | 9 | 13 | 9 | 5 | 1 | - | - | - |
|  | - | - | - | - | - | - | - | 1 | 5 | 9 | 5 | 1 | - | - | - | - |
|  | - | - | - | - | - | - | - | - | 1 | 5 | 1 | - | - | - | - | - |
|  | - | - | - | - | - | - | - | - | - | 1 | - | - | - | - | - | - |
| STACK 211 CONTENTS | - | 20 | 20 | - | 17 | 21 | 25 | 29 | 18 | 22 | 18 | 29 | 25 | 21 | 17 | - |
|  | - | - | - | - | - | 17 | 21 | 25 | 29 | 18 | 29 | 25 | 21 | 17 | - | - |
|  | - | - | - | - | - | - | 17 | 21 | 25 | 29 | 25 | 21 | 17 | - | - | - |
|  | - | - | - | - | - | - | - | 17 | 21 | 25 | 21 | 17 | - | - | - | - |
|  | - | - | - | - | - | - | - | - | 17 | 21 | 17 | - | - | - | - | - |
|  | - | - | - | - | - | - | - | - | - | 17 | - | - | - | - | - | - |
| STACK 212 CONTENTS | - | 36 | 36 | - | 33 | 37 | 41 | 45 | 34 | 38 | 34 | 45 | 41 | 37 | 33 | - |
|  | - | - | - | - | - | 33 | 37 | 41 | 45 | 34 | 45 | 41 | 37 | 33 | - | - |

Table 2   (continued)

| CLOCK CYCLE | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | - | - | - | - | - | - | 33 | 37 | 41 | 45 | 41 | 37 | 33 | - | - | - |
| | - | - | - | - | - | - | - | 33 | 37 | 41 | 37 | 33 | - | - | - | - |
| | - - | - - | - - | - - | - - | - - | - - | - - | 33 | 37 37 | 33 - | - - | - - | - - | - - | - - |
| | - | - | - | - | - | - | - | - | - | 33 | - | - | - | - | - | - |
| STACK 213 CONTENTS | - | 52 | 52 | - | 49 | 53 | 57 | 61 | 50 | 54 | 50 | 61 | 57 | 53 | 49 | - |
| | - | - | - | - | - | 49 | 53 | 57 | 61 | 50 | 61 | 57 | 53 | 49 | - | - |
| | - | - | - | - | - | - | 49 | 53 | 57 | 61 | 57 | 53 | 49 | - | - | - |
| | - | - | - | - | - | - | - | 49 | 53 | 57 | 53 | 49 | - | - | - | - |
| | - | - | - | - | - | - | - | - | 49 | 53 | 49 | - | - | - | - | - |
| | - | - | - | - | - | - | - | - | - | 49 | - | - | - | - | - | - |
| SXINDEX | - | - | - | 4 | - | - | - | - | - | - | 6 | 2 | 13 | 9 | 5 | 1 |
| SY INDEX | - | - | - | 20 | - | - | - | - | - | - | 22 | 18 | 29 | 25 | 21 | 17 |
| SW INDEX | - | - | - | 36 | - | - | - | - | - | - | 38 | 34 | 45 | 41 | 37 | 33 |
| SZ INDEX | - | - | - | 52 | - | - | - | - | - | - | 54 | 50 | 61 | 57 | 53 | 49 |
| SA_SX_XUU MUX OUTPUT | SA | - | SA | SX | - | - | - | - | - | - | SX | SX | SX | SX | SX | SX |
| SA_SD_YUU MUX OUTPUT | SA | - | SD | SD | - | - | - | - | - | - | SD | SD | SD | SD | SD | SD |
| SB_SY_XUL MUX OUTPUT | - | - | SB | SY | - | - | - | - | - | - | SY | SY | SY | SY | SY | SY |
| SW_SD_YLU MUX OUTPUT | SD | - | - | SW | - | - | - | - | - | - | SW | SW | SW | SW | SW | SW |

Table 2   (continued)

| CLOCK CYCLE | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| SC_SA_XLL MUX OUTPUT | SC | - | - | SA | - | - | - | - | - | - | SA | SA | SA | SA | SA | SA |
| SZ_SC_YLL MUX OUTPUT | SC- | - | - | SZ | - | - | - | - | - | - | SZ | SZ | SZ | SZ | SZ | SZ |
| XUU INDEX | 0 | - | 8 | 4 | - | - | - | - | - | - | 6 | 2 | 13 | 9 | 5 | 1 |
| YUU INDEX | 0 | - | 56 | 60 | - | - | - | - | - | - | 58 | 62 | 51 | 55 | 59 | 63 |
| XUL INDEX | - | - | 24 | 20 | - | - | - | - | - | - | 22 | 18 | 29 | 25 | 21 | 17 |
| YUL INDEX | - | - | 40 | 44 | - | - | - | - | - | - | 42 | 46 | 35 | 39 | 43 | 47 |
| XLU INDEX | 16 | - | - | 28 | - | - | - | - | - | - | 26 | 30 | 19 | 23 | 27 | 31 |
| YLU INDEX | 48 | - | - | 36 | - | - | - | - | - | - | 38 | 34 | 45 | 41 | 37 | 33 |
| XLL INDEX | 32 | - | - | 12 | - | - | - | - | - | - | 10 | 14 | 3 | 7 | 11 | 15 |
| YLL INDEX | 32 | - | - | 52 | - | - | - | - | - | - | 54 | 50 | 61 | 57 | 53 | 49 |
| GUU INDEX | 0 | - | 8 | 4 | - | - | - | - | - | - | 6 | 2 | 13 | 9 | 5 | 1 |
| HUU INDEX | - | - | 56 | 60 | - | - | - | - | - | - | 58 | 62 | 51 | 55 | 59 | 63 |
| GUL INDEX | - | - | 24 | 20 | - | - | - | - | - | - | 22 | 18 | 29 | 25 | 21 | 17 |
| HUL INDEX | - | - | 40 | 44 | - | - | - | - | - | - | 42 | 46 | 35 | 39 | 43 | 47 |
| GLU INDEX | 16 | - | - | 28 | - | - | - | - | - | - | 26 | 30 | 19 | 23 | 27 | 31 |
| HLU INDEX | 48 | - | - | 36 | - | - | - | - | - | - | 38 | 34 | 45 | 41 | 37 | 33 |
| GLLINDEX | 32 | - | - | 12 | - | - | - | - | - | - | 10 | 14 | 3 | 7 | 11 | 15 |
| HLL INDEX | - | - | - | 52 | - | - | - | - | - | - | 54 | 50 | 61 | 57 | 53 | 49 |

Preferably, systems embodying the present invention are used to post process the FFT data generated by a pipeline FFT processor in order to achieve the fastest possible processing times. However, it is to be realised that a system embodying the present invention used in combination with a non-pipeline FFT processor will also improve processing times.

Having thus described the present invention with reference to a preferred embodiments it is to be well understood that the embodiments in question are exemplary only and that modifications and variations such as will occur to those possessed of the appropriate knowledge and skills may be made without departure from the scope of the invention as set forth in the appended claims.

**Claims**

1. A digital signal processing system for receiving from a Fourier Transform processor a first multiplicity of data points which together represent a Fourier Transform and processing the first multiplicity of data points to generate a second multiplicity of data points which together represent one or more other Fourier Transforms, the system comprising:

   processing means for processing the first multiplicity of data points to generate the second multiplicity of data points by processing a plurality of pairs of data points of the first multiplicity of data points, each pair of data points comprising first and second data points that are to be processed together at the processing means; and a circuit for connecting the Fourier Transform processor and the processing means to route the first multiplicity of data points from the Fourier Transform processor to the processing means, in use the circuit being controlled so that the first and second data points of any given pair of the plurality of pairs of data points are input to the processing means substantially simultaneously and with at least one of them having been routed from the Fourier Transform processor to the processing means without being stored in memory.

2. A system according to claim 1, wherein the circuit comprises:

   memory means for storing data points of the first multiplicity of the data points input to the circuit, and a controller for controlling the memory means and the circuit such that a first data point that is input to the circuit prior to a second data point with which the first data point forms a pair, is stored in the memory means until the second data point is input to the circuit, at which time both the first and second data points are routed to the processing means.

3. A system according to claim 2, wherein the circuit comprises a first input for receiving a first set of data points of the first multiplicity of data points and a second input for receiving a second set of data points of the first multiplicity of data points, and wherein the memory means comprises first and second memory devices, the first input being connected to the first memory device and the second input being connected to the second memory device and wherein the circuit is controlled by the controller so that a data point of the first set that is input at the first input prior to a data point of the second set with which the data point of the first set forms a pair being input at the second input, is stored in the first memory device until the data point of the second set is input at the second input, at which time both data points are routed to the processing means, with the data point of the second set by-passing the memory means.

4. A system according to claim 3, wherein the circuit is controlled by the controller so that a data point of the second set input to the second input prior to a data point of the first set with which the data point of the second set forms a pair being input at the first input is stored in the second memory device until the data point of the first set is input at the first input at which time both data points are routed to the processing means, with the data point of the first set by-passing the memory means.

5. A system according to claim 3 or 4, wherein the circuit is controlled by the controller so that a pair of data points to be processed together at the processing means and which are input substantially simultaneously to the circuit, one at the first input and the other at the second input are routed to the processing means with neither data point being first stored in memory.

6. A system according to claim 3, 4 or 5, wherein the circuit is controlled by the controller such that a data point which is to be paired with itself for processing at the processing means and which is input to either the first input or the second input, is routed twice to the processing means at substantially the same time, with neither data point being stored first in memory.

7. A system according to any of claims 4 to 6, wherein the processing means comprises first and second processing elements, the first element for processing together any data point of the first set that has been stored in the first memory device with its paired data point of the second set that has by-passed the memory means and wherein the second processing means is for processing together any data point of the second set that has been stored in the second memory device with its paired data point of the first set that has by-passed the memory means.

8. A system according to claim 7 wherein the first processing element can process a pair of data points in parallel with the second processing element processing a pair of data points.

9. A system according to claim 7, wherein the circuit further comprises;
a third input for receiving a third set of data points of the multiplicity of data points, and
a fourth input for receiving a fourth set of data points of the multiplicity of data points, and wherein the memory means further comprises third and fourth memory devices, the third input being connected to the third memory device and the fourth input being connected to the fourth memory device, and wherein the circuit is controlled by the controller so that a data point of the third set that is input to the third input prior to a data point of the fourth set with which the data point of the third set forms a pair being input to fourth input, is stored in the third memory device until the data point of the fourth set is input at the fourth input at which time both data points are routed to the processing means, with the data point of the fourth set by-passing the memory means.

10. A system according to claim 9, wherein the circuit is controlled by the controller so that a data point of the fourth set that is input to the fourth input prior to a data point of the third set with which the data point of the fourth set is paired being input at the third input, is stored in the fourth memory device until the data point of the third set is input at the third input at which time both points are routed to the processing means, with the data point of the third set by-passing the memory means.

11. A system according to claim 10 wherein the processing means further comprises third and fourth processing elements, the third element for processing together any data point of the third set that has been stored in the third memory device, with its paired data point of the fourth set that has by-passed the memory means and wherein, the fourth processing means is for processing together any data point of the fourth set that has been stored in the fourth memory device with its paired data point of the third set that has by-passed the memory means.

12. A system according to claim 11 wherein the third processing element can process a pair of data points in parallel with the fourth processing element processing a pair of data points.

13. A system according to any of claims 3 to 10, wherein any of the memory devices are memory stacks.

14. A signal processing apparatus comprising:

processing means for receiving from a data generator a first multiplicity of data points which together represent a Fourier Transform and processing the first multiplicity of data points to generate a second multiplicity of data points which together represent one or more further Fourier Transforms;
a circuit for routing the first multiplicity of data points from the data generator to the processing means, the circuit comprising a memory means for storing data points of the first multiplicity of data points, and
a controller for controlling the routing of the first multiplicity of data points across the circuit, in use, the controller controlling the routing such that an earlier data point, input to the circuit prior to a later data point with which the earlier data point needs to be processed at the processing means, is stored in the memory means until the later data point is input to the circuit, at which time both the earlier data point and the later data point are fed to the processing means, with the later data point by-passing the memory means.

15. A signal processing method comprising:

generating at a data processor a first multiplicity of data points which together represent a Fourier Transform;
routing the first multiplicity of data points across a circuit to a processing means; and
processing the first multiplicity of data points at the processing means to generate a second multiplicity of data points which together represent one or more further Fourier Transforms, in which method the routing of data points across the circuit is controlled such that an earlier data point that is input to the circuit prior to a later data point with which the earlier input data points need to be processed at the processing means, is stored in a memory in the circuit until the later data point is input to the circuit, at which time both the earlier data point and the later data point are fed to the processing means with the later input data point by-passing the memory.

FIG 1

f(r)

1

ADC

d(N)

0 | 1 2 3 ... N-1

2

FFT
Processor

D(K)

1 2 3 ... K-1

EP 1 387 288 A2

FIG 2

FIG 3

## FIG 4

$d_i(n)$

3
Even/Odd select

$d(n) = d_i(2n) + j \cdot d_i(2n+1)$

$N' = N/2$ point FFT — 4

$D(k)$

Post Process — 5

$D_i(k)$

## FIG 5

$d_0(n)$    $d_1(n)$

6

$d(n) = d_0(n) + j \cdot d_1(n)$

N point FFT — 7

$D(k)$

Post Process — 8

$D_0(k)$    $D_1(k)$

FIG 6

FIG 7    D(k)

# FIG 8

FIG 9